Europäisches Patentamt

European Patent Office

Office européen des brevets

(11) Veröffentlichungsnummer: **0 043 117**
A1

(12) **EUROPÄISCHE PATENTANMELDUNG**

(21) Anmeldenummer: **81104948.5**

(22) Anmeldetag: **26.06.81**

(51) Int. Cl.³: **B 65 G 53/58**
**B 65 G 53/66**

(30) Priorität: **28.06.80 DE 3024568**

(43) Veröffentlichungstag der Anmeldung:
**06.01.82 Patentblatt 82/1**

(84) Benannte Vertragsstaaten:
**AT BE CH DE FR GB IT LI LU NL SE**

(71) Anmelder: **DÜRR Automation + Fördertechnik GmbH**
**Eisenbahnstrasse 15**
**D-7889 Grenzach-Wyhlen(DE)**

(72) Erfinder: **Stelter, Jürgen, Ing. grad.**
**Eisenbahnstrasse 66a**
**D-7889 Grenzach-Wyhlen(DE)**

(72) Erfinder: **Hänggi, Manfred**
**Lerchenweg 1**
**D-7888 Rheinfelden 3(DE)**

(74) Vertreter: **Hoeger, Stellrecht & Partner**
**Uhlandstrasse 14c**
**D-7000 Stuttgart 1(DE)**

(54) Verfahren und Vorrichtung zum pneumatischen Fördern von Fördergut.

(57) Verfahren und Vorrichtung zum pneumatischen Fördern von Fördergut längs einer Förderleitung (10), in die aus in Abständen hintereinander in letztere einmündenden Fördergasleitungen (8) ständig Fördergas eingespeist wird. Jede Fördergasleitung (18) weist im Abstand von ihrer Einmündung (28) eine kurze Querschnittsverengung (20) auf, in deren Bereich die Fördergasgeschwindigkeit auf Schallgeschwindigkeit erhöht und vor der Einmündung (28) wieder vermindert wird.

Mehrere Fördergasleitungen (18) werden aus einer gemeinsamen Speiseleitung (16,17) gespeist, die neben der Förderleitung (10) verläuft.

Die Fördergasleitungen (18) münden unter einem spitzen Winkel von ca. 35° in die Förderleitung (10) ein und weisen zwei durch eine dichte Verschraubung (24) lösbar miteinander verbundene Abschnitte (21, 23) auf, wobei eine die Querschnittsverengung (20) bildende Lochblende und ein Filter (22) von der Verschraubung auswechselbar gehalten werden.

FIG.1

EP 0 043 117 A1

## Verfahren und Vorrichtung zum pneumatischen Fördern von Fördergut

Die Erfindung bezieht sich auf ein Verfahren sowie eine Vorrichtung zur pneumatischen Förderung von pulver- und/ oder granulatförmigen Schüttgütern, von schwerfließenden und/oder klebrigen, von abrasiven, empfindlichen und/oder feuchten Materialien in einer rohrförmigen Förderleitung, und zwar mittels einer Vorrichtung, deren Förderleitung über ihre Länge aus mehreren, in Abständen hintereinander in die Förderleitung einmündenden Gasleitungen mit Fördergas versorgt wird.. Es ist also an eine hinsichtlich Förderleistung und Wirtschaftlichkeit (vergleichsweise niedriger Energieaufwand) gegenüber anderen pneumatischen Förderverfahren sehr vorteilhafte sogenannte Dichtstromförderung gedacht.

Ein derartiges Verfahren ist z. B. durch die DE-PS 26 57 677 bekannt geworden. Dieses bekannte Verfahren weist jedoch den Nachteil auf, daß das Fördergas aus der Druckgasquelle, welche die in die Förderleitung einmündenden Gasleitungen speist, bei Entstehen eines Pfropfens in der Förderleitung im wesentlichen durch diejenige Gasleitung in die Förderleitung strömt, welche ihm den geringsten Widerstand entgegensetzt. Hieraus resultiert eine ungleichmäßige Fördergaszuführung in die Förderleitung, und es besteht darüber hinaus keinerlei Aussicht, daß der Pfropfen in der Förderleitung wieder auf-

-2-

gelöst wird.

Bei einer anderen bekannten Fördervorrichtung (DE-
PS 449 393) mit einer neben der Förderleitung verlaufenden Fördergas-Speiseleitung sind in den von der Fördergas-Speiseleitung zur Förderleitung verlaufenden Gasleitungen Ventile angeordnet, die zur Beseitigung von in der
Förderleitung gebildeten Pfropfen druckabhängig selbsttätig öffnen und wieder schließen, d. h. bei dieser bekannten Fördervorrichtung sind die in die Förderleitung
einmündenden Gasleitungen normalerweise geschlossen.
Nachteil dieser bekannten Fördervorrichtung ist also nicht
nur, daß sie nicht nach dem erwähnten Dichtstrom-Förderverfahren arbeitet, sondern daß die druckabhängig
steuerbaren Ventile in den Gasleitungen einen erheblichen
Aufwand bedingen und außerdem eine Quelle für mögliche
Störungen darstellen.

Der vorliegenden Erfindung lag nun die Aufgabe zugrunde,
ein Verfahren der eingangs erwähnten Art so auszugestalten, daß auch bei Pfropfenbildung in der Förderleitung
definierte Gasmengen durch die einzelnen Gasleitungen in
die Förderleitung gelangen und daß eine Auflösung von
Pfropfen bewirkt wird.

Diese Aufgabe läßt sich erfindungsgemäß dadurch lösen,
daß die Geschwindigkeit des Fördergases in jeder der Gasleitungen an einer Stelle vor der Einmündung in die Förderleitung auf Schallgeschwindigkeit erhöht und gleichfalls
vor der Einmündung wieder vermindert wird. Durch die Erzeugung von Schallgeschwindigkeit an einer Stelle einer
jeden der Gasleitungen wird die jede Gasleitung pro Zeiteinheit durchströmende Fördergasmenge von den Druckverhältnissen in der Förderleitung unabhängig, und durch die Verminderung der Fördergasgeschwindigkeit vor der Einmündung
in die Förderleitung wird verhindert, daß die Wand der
Förderleitung im Bereich der Einmündungen der Gasleitungen
einem starken abrasiven Verschleiß ausgesetzt wird.

Das erfindungsgemäße Verfahren läßt sich auch mit einer
besonders einfachen Vorrichtung durchführen; ausgehend von
einer Fördervorrichtung mit einer rohrförmigen Förderleitung, in die in Abständen hintereinander mehrere von mindestens einer Druckgasquelle gespeiste Gasleitungen einmünden, wird eine solche Vorrichtung erfindungsgemäß so ausgebildet, daß jede Gasleitung im Abstand vor ihrer Einmündung
in die Förderleitung eine Querschnittsverengung aufweist,
hinter der und vor der Einmündung sich der Strömungsquerschnitt wieder erweitert, und daß der Druck des Fördergases
vor der Querschnittsverengung in einem überkritischen Verhältnis zum Druck in der Förderleitung steht. Erfindungsgemäß sind also im Gegensatz zu der bekannten Fördervorrichtung nach der DE-PS 449 393 in den Gasleitungen keinerlei
bewegliche Teile erforderlich, und die Querschnittsverengung
kann die Form einer einfachen Lochblende aufweisen.

Bei pneumatischen Fördervorrichtungen mit mehreren, von einer gemeinsamen Druckluftquelle gespeisten Förderleitungen ist es bereits bekannt ( DE-PS 1 121 544),von der Druckluftquelle zu jeder Förderleitung eine einzige Gasleitung zu führen und in dieser eine Düse zur Erzeugung von Schallgeschwindigkeit anzuordnen. Bei der bekannten Konstruktion dient die Erzeugung der Schallgeschwindigkeit also einem völlig anderen Zweck als bei dem erfindungsgemäßen Förderverfahren, bei dem es darum geht, zur Erzielung einer Dichtstromförderung entlang einer Förderleitung überall eine gleichmäßige Fördergaszuführung zu bewirken.

Zweckmäßigerweise wird die Querschnittsverengung von einer Dosiereinrichtung gebildet, d. h. in jeder der Gasleitungen ist eine Dosiereinrichtung angeordnet, die so ausgebildet ist, daß bei einem überkritischen Druckverhältnis Schallgeschwindigkeit erzeugt wird, worauf sich die Fördergasgeschwindigkeit im weiteren Verlauf der Gasleitung und vor der Einmündung in die Förderleitung wieder verringert.

Durch die Erfindung wird also gewährleistet, daß die durch jede einzelne Gasleitung strömende Fördergasmenge stets genau gefiniert ist. Auch wenn sich ein Pfropfen in der Förderleitung bildet, strömt bei Durchführung des erfindungsgemäßen Verfahrens weiterhin Fördergas durch alle Gasleitungen in die Förderleitung, und zwar auch durch diejenigen Gasleitungen, welche sich im Bereich des betreffenden Pfropfens befinden. Hierdurch wird der gebildete Pfropfen wieder aufgelöst und die Förderung kann weiterhin einwandfrei aufrechterhalten werden.

Da es die Erfindung erstmals ermöglicht, die der Förderleitung durch die einzelnen Gasleitungen zugeführten Fördergasmengen exakt vorherzubestimmen, ermöglicht es die
Erfindung auch, dem bekannten Druckabfall pro Förderleitungsabschnitt Rechnung zu tragen und trotz der Zuführung
von Fördergas entlang der Förderleitung eine gleichmäßige
Fördergeschwindigkeit zu gewährleisten: Erfindungsgemäß
wird die Förderleitung so ausgebildet, daß sich ihr Querschnitt in Förderrichtung in vorbestimmter Weise erweitert.

Infolge der erfindungsgemäß erzielten gleichmäßigen, stoßfreien und ggf. langsamen Dichtstromförderung wird der Verschleiß an den Wandungen der Förderleitung und am Fördergut
auf ein Minimum reduziert. Ein weiterer, durch die Erfindung
erzielter Vorteil ist in der Minimierung der Fördergasmengen
zu sehen, was sich energie- und kostensparend auswirkt.

Bei Verwendung von Druckluft als Fördergas beträgt das Verhältnis des Druckes vor der Querschnittsverengung zum Druck
in der Förderleitung vorzugsweise mindestens 2:1; es kann
also grundsätzlich auch ein größeres Druckverhältnis gewählt werden. Sofern andere Gase (z. B. Argon) als Fördergas verwendet werden, gilt natürlich - entsprechend der von
Luft abweichenden Gaskonstanten - ein anderer Mimimalwert
für das erfindungsgemäße überkritische Druckverhältnis.

Durch das überkritische Druckverhältnis ist in jedem Fall die in den Gasleitungen angestrebte Schallgeschwindigkeit des Fördergases gewährleistet. Die Dosiereinrichtung, bei der es sich z. B. um eine Düse, eine Lochblende, ein geeichtes Nadelventil oder dergleichen handeln kann, trägt hierbei wesentlich zur Erzeugung und Aufrechterhaltung der Schallgeschwindigkeit in den Gasleitungen bei. Ein geeichtes Nadelventil als Dosiereinrichtung hat den Vorteil, daß die zuzuführende Gasmenge innerhalb bestimmter Grenzen variiert werden kann.

Weitere Merkmale, Vorteile und Einzelheiten der Erfindung ergeben sich aus den beigefügten Ansprüchen und/oder aus der nachfolgenden Beschreibung und der beigefügten zeichnerischen Darstellung einer bevorzugten Ausführungsform einer erfindungsgemäßen pneumatischen Fördervorrichtung; in der Zeichnung zeigen:

Figur 1          eine schematische Darstellung der pneumatischen Fördervorrichtung;

Figur 2          einen Ausschnitt aus der pneumatischen Fördervorrichtung, teilweise in Schnittdarstellung;

Figur 3          eine schematische schaubildliche Darstellung der Druck- und Geschwindigkeitsverhältnisse innerhalb der Fördervorrichtung nach Figur 1 und

Figur 4          eine vergrößerte Schnittdarstellung der

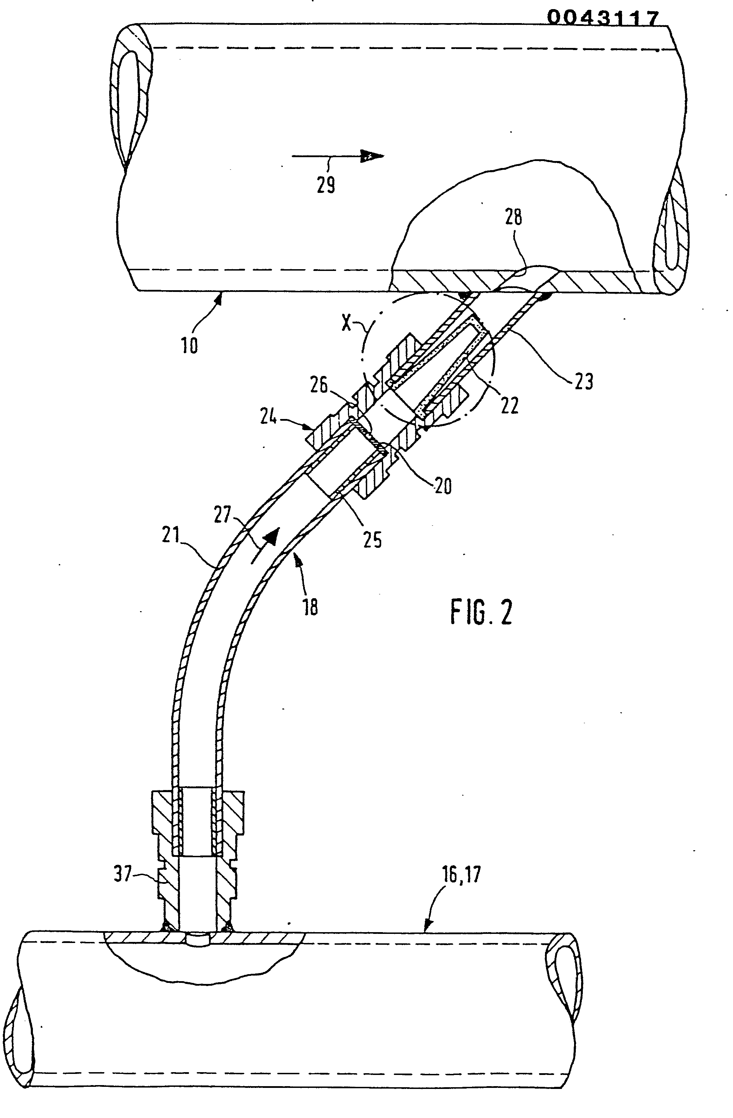

                in Figur 2 mit "X" bezeichneten Einzelheit.

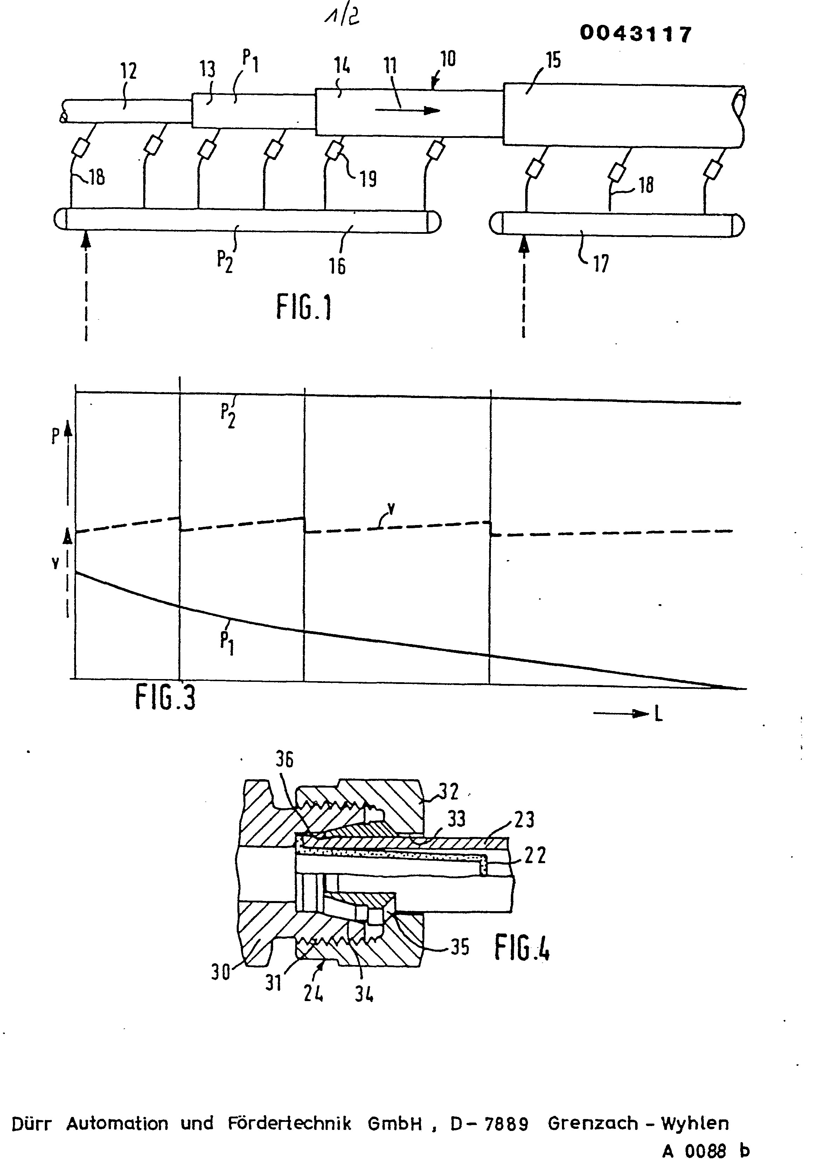

Nach Figur 1 bezeichnet 10 eine aus mehreren, sich in Förderrichtung 11 im Durchmesser stufenartig vergrößernden
Teilabschnitten 12 - 15 bestehende Förderleitung zur pneumatischen Dichtstrom-Förderung von schüttfähigen oder pulverförmigen Materialien, zähfließenden Massen, Schlämmen
oder dgl. Die Förderleitung 10 wird hinsichtlich des zu
fördernden Gutes von einem Aufgabesender (nicht dargestellt) versorgt, in den das zu fördernde Gut chargenweise
eingespeist wird. Eine definierte Produktaufgabe kann hierbei erfolgen entweder durch Druckdifferenz von der Förderleitung zum Aufgabesender oder durch ein mechanisches Dosiersystem, wie Schnecke oder Schleuse oder durch einen
Blasdosierschieber. Parallel zu der rohrförmigen Förderleitung  10 sind zwei Hochdruck-By-pass-Speicher  16 und
17 angeordnet. Die Hochdruck-By-pass-Speicher 16, 17 sind
großvolumig ausgebildet und werden von einer Druckgasquelle
(nicht gezeigt), die - über eine Druck-Reduziervorrichtung
(nicht gezeigt) - auch zur Druckgasbeaufschlagung des Aufgabesenders dienen kann, oder hiervon unabhängig ist, mit
Druckgas (z. B. Druckluft) versorgt. Die Hochdruck-By-pass-
Speicher 16 und 17 dienen zur Zuführung von Fördergas in die
Förderleitung 10. Zu diesem Zweck gehen von den Hochdruck-
By-pass-Speichern 16, 17 jeweils mehrere einzelne Gasleitungen 18 aus, die unter einem Winkel von etwa 35° (vgl.
hierzu Figur 2) in die Förderleitung 10 einmünden. Die beschriebene Anlage ist so konzipiert, daß bei Verwendung von
Druckluft in den Hochdruck-By-pass-Speichern 16, 17 ein
mindestens um den Faktor 2 höherer Druck herrscht als in
der Förderleitung 10. Es handelt sich hierbei um ein sogenanntes überkritisches Druckverhältnis, welches bewirkt, daß in den Gasleitungen 18 Schallgeschwindigkeit erzeugt werden kann. Hierzu dient eine in jeder einzelnen Gasleitung 18 angeordnete Dosiereinrichtung 19. Bei der Ausführungsform nach Figur 2 dient als Dosiereinrichtung eine Lochblende 20, die am Ende eines ersten Gasleitungsabschnittes 21 angeordnet ist. Die Lochblende 20, welche in rückwärtiger Richtung von einer Verstärkungshülse 25 abgestützt wird, besitzt eine enge Durchtrittsöffnung 26, durch deren Querschnittsfläche die hindurchströmende Gasmenge genau definiert wird. Die zweite Größe zur genauen Definition der durch die Dosiereinrichtung hindurchströmenden Gasmenge ist die Gasgeschwindigkeit. Da nun - wie bereits oben ausgeführt - zwischen By-pass-System 16, 17 und Förderleitung 10 ein <u>überkritisches</u> Druckverhältnis $P_2/P_1$ herrscht (vgl. auch Figur 3), ist die Gasgeschwindigkeit in der Lochblende konstant, nämlich gleich Schallgeschwindigkeit.

Die Summe aller Blendenquerschnitte, multipliziert mit der definierten Luft- oder Gasgeschwindigkeit (Schallgeschwindigkeit) ergibt somit die Förderluft-Gesamtmenge der Gasleitungen 18. Die Förderluftmenge der Gasleitungen 18 plus Förderluftmenge des nicht gezeigten pneumatischen Aufgabesenders für die Förderleitung 10 ergeben den Gesamtluftverbrauch.

Anstelle der gezeigten Lochblende 20, 26 können auch andere Dosiereinrichtungen, wie z. B. Düsen, geeichte Nadelventile oder dgl. zur Anwendung kommen.

Der Lochblende 20 ist in Förderrichtung 27 des Gases ein
Filter 22 nachgeschaltet, um das Eindringen von Fördergut
in die Gasleitungen 18 zu vermeiden. Das Filter 22 ist in
einem zweiten Gasleitungsabschnitt 23 angeordnet. Dieser
besitzt einen gegenüber dem Querschnitt der Lochblendenöffnung 26 wesentlich erweiterten Querschnitt, so daß die
Gasgeschwindigkeit am Eintritt 28 wieder stark reduziert
ist. Hierdurch wird abrasiver Verschleiß an den Innenwandungen der Förderleitung 10 wie auch innerhalb des zu fördernden Gutes selbst vermieden. Zur Minimierung des Verschleisses trägt außerdem auch wesentlich die mit Bezug
auf die Förderrichtung 29 innerhalb der Förderleitung nahezu tangentiale Gaszuführung bei, wie sie in Figur 2 verdeutlicht ist (Gas-Einblaswinkel 35°).

Die beiden Leitungsabschnitte 21, 23 sind durch eine dichtende Verschraubung 24 miteinander verbunden, die in ihrem
Aufbau im einzelnen in Figur 4 veranschaulicht ist und die
gleichzeitig zur Fixierung der Lochblende 20 einerseits
und des Filters 22 andererseits dient. Nach Figur 4 besteht
die Verschraubung 24 im einzelnen aus einem Gewindeteil 30
mit Außengewinde 31, auf das eine Überwurfmutter 32 aufgeschraubt ist. Die Überwurfmutter 32 weist eine zentrale
Bohrung 33 auf, die von dem Gasleitungsteil 23 durchsetzt
wird. Zwischen einer konischen Bohrung 34 des Gewindeteils
30 und dem in diese hineinragenden Ende des Gasleitungsteils 23 ist ein Schneidring 35 eingespannt, dessen
Schneidkante 36 unter dem durch die Überwurfmutter bewirkten radialen und axialen Druck in das Material des Gasleitungsteils 23 einschneidet und auf diese Weise eine dichtende Verbindung zwischen den Teilen 23, 30 herstellt. Die dichtende Verbindung zwischen dem anderen, mit 21 bezifferten Teil der Gasleitung 18 und dem Gewindeteil 30
erfolgt in entsprechender Weise. Ebenso der Anschluß der
Gasleitung 18 an den Hochdruck-By-pass-Speicher 16, 17.
Auch hier ist eine entsprechende Verschraubung vorgesehen,
die in Figur 2 das Bezugszeichen 37 trägt.

Das Schaubild nach Figur 3 zeigt, daß die Fördergeschwindigkeit in den einzelnen Abschnitten 12 - 15 der Förderleitung 10 dank deren Querschnittserweiterungen im wesentlichen konstant bleibt, wohingegen der Druck $P_1$ über die
Förderlänge L stetig abnimmt. Die Kurve $P_2$ kennzeichnet
den Druck in den Hochdruck-By-pass-Speichern 16 und 17.
Der oder die Hochdruck-By-pass-Speicher 16 bzw. 17 gewährleisten also über die gesamte Förderleitungslänge die definierte Gaszufuhr. Durch gleichbleibende Druckverhältnisse
wird die Einspeisung an jeder Stelle des Förderleitungssystems konstant gehalten.

Die gezeigte und beschriebene pneumatische Förderung kann
für übliche pulverförmige und granulatförmige Produkte mit
dem Vorteil des geringen Energieaufwands sowie des geringen
Verschleisses eingesetzt werden. Eine weitere Anwendungsmöglichkeit liegt in der Förderung von schwierigen abrasiven, klebrigen, feuchten und empfindlichen Produkten. Die
Förderung derartiger Produkte war mit bisherigen pneumatischen Fördersystemen zum Teil unmöglich. Das System kann
auch zur Förderung von Kohle bei z. B. Kohledruckvergasungsanlagen angewandt werden.

0043117

- 1 -

Patentansprüche

1. Verfahren zum pneumatischen Fördern von Fördergut längs
einer rohrförmigen Förderleitung, in die aus mindestens
einer Druckgasquelle über mehrere, in Abständen hintereinander in die Förderleitung einmündende Gasleitungen
zumindest im wesentlichen ständig Fördergas eingespeist
wird, d a d u r c h   g e k e n n z e i c h n e t, daß
die Geschwindigkeit des Fördergases in jeder der Gasleitungen (18) an einer Stelle (20) vor der Einmündung (28) in die Förderleitung (10) auf Schallgeschwindigkeit erhöht und gleichfalls vor der Einmündung (28)
wieder vermindert wird.

2. Vorrichtung zur Durchführung des Verfahrens nach Anspruch
1, mit einer rohrförmigen Förderleitung, in die in Abständen hintereinander mehrere, von mindestens einer
Druckgasquelle gespeiste Gasleitungen einmünden, d a -
d u r c h   g e k e n n z e i c h n e t, daß jede Gasleitung (18) im Abstand vor ihrer Einmündung (28) in die
Förderleitung (10) eine Querschnittsverengung (20) aufweist, hinter der und vor der Einmündung sich der Strömungsquerschnitt wieder erweitert, und daß der Druck des
Fördergases vor der Querschnittsverengung in einem überkritischen Verhältnis zum Druck in der Förderleitung
steht.

3. Vorrichtung nach Anspruch 2, d a d u r c h   g e k e n n - z e i c h n e t, daß die Querschnittsverengung (20) durch eine Dosiereinrichtung (19) gebildet wird.

4. Vorrichtung nach Anspruch 2 oder 3, d a d u r c h   g e - k e n n z e i c h n e t, daß bei Verwendung von Luft als Fördergas das Verhältnis des Druckes vor der Querschnittsverengung (20) zum Druck in der Förderleitung mindestens 2:1 beträgt.

5. Vorrichtung nach einem oder mehreren Ansprüche 2 bis 4, d a d u r c h   g e k e n n z e i c h n e t, daß die Quer- schnittsverengung als Düse ausgebildet ist.

6. Vorrichtung nach einem oder mehreren der Ansprüche 2 bis 4, d a d u r c h   g e k e n n z e i c h n e t, daß die Querschnittsverengung als Lochblende (20) ausgebildet ist.

7. Vorrichtung nach einem oder mehreren der Ansprüche 2 bis 6, d a d u r c h   g e k e n n z e i c h n e t, daß die Querschnittsverengung von einer Dosiereinrichtung (19) mit einstellbar veränderlichem Durchlaß gebildet wird.

8. Vorrichtung nach Anspruch 7, d a d u r c h   g e k e n n - z e i c h n e t, daß die Dosiereinrichtung als insbesondere geeichtes Nadelventil ausgebildet ist.

9. Vorrichtung nach einem oder mehreren der Ansprüche 2 bis 8, d a d u r c h   g e k e n n z e i c h n e t, daß neben der Förderleitung eine Fördergas-Speiseleitung (16, 17) verläuft, von der die Gasleitungen (18) abzweigen.

10. Vorrichtung nach einem oder mehreren der Ansprüche 2 bis 9, d a d u r c h   g e k e n n z e i c h n e t, daß die einzelnen Gasleitungen (18) jeweils einen ersten Leitungsabschnitt (21) mit an dessen Ende angeordneter, die Querschnittsverengung bildender Dosiereinrichtung (20) und einen zweiten Leitungsabschnitt (23) mit an dessen Anfang angeordnetem Filter (22) aufweisen und daß die beiden Leitungsabschnitte durch eine dichtende Verschraubung (24) lösbar miteinander verbunden sind.

11. Vorrichtung nach Anspruch 10, d a d u r c h   g e k e n n z e i c h n e t, daß die dichtende Verschraubung (24) zugleich zur Fixierung der Dosiereinrichtung (20) einerseits und des Filters (22) andererseits dient.

12. Vorrichtung nach einem oder mehreren der Ansprüche 2 bis 11, d a d u r c h   g e k e n n z e i c h n e t, daß die Druckgasquelle(16, 17) als Hochdruck-Speicher mit im Verhältnis zu dem Gesamtvolumen aller einzelnen Gasleitungen (18) großem Speichervolumen ausgebildet ist.

13. Vorrichtung nach einem oder mehreren der Ansprüche
2 bis 12, mit einem pneumatischen Aufgabesender für
das Fördergut in die Förderleitung, d a d u r c h  g e -
k e n n z e i c h n e t, daß der Aufgabesender einerseits und die Druckgasquelle (16, 17) für die Gasleitungen (18) andererseits an getrennte Primärdruckgasquellen angeschlossen sind.

14. Vorrichtung nach einem oder mehreren der Ansprüche
2 bis 12, d a d u r c h  g e k e n n z e i c h n e t,
daß der Aufgabesender und die Druckgasquelle (16,
17) für die Gasleitungen (18) an eine gemeinsame
Primärdruckgasquelle angeschlossen sind, von der
zwei Leitungszweige ausgehen, wobei der eine Leitungszweig unmittelbar zu der Druckgasquelle (16,
17) für die Gasleitungen (18) und der zweite Leitungszweig über eine Druckreduziervorrichtung zu dem Aufgabesender führt.

15. Vorrichtung nach einem oder mehreren der Ansprüche
2 bis 14, d a d u r c h  g e k e n n z e i c h n e t,
daß die Gasleitungen (18) unter einem spitzen Winkel,
vorzugsweise einem Winkel von ca. 35 Grad, zur Förderrichtung (29) in die Förderleitung (10) einmünden.

16. Vorrichtung nach einem oder mehreren der Ansprüche 2 bis 15, d a d u r c h   g e k e n n z e i c h n e t, daß die Gasleitungen (18) in einem Wirbelbläser in die Förderleitung (10) münden, welcher mehrere, über den Umfang der Förderleitung verteilte Einblasöffnungen aufweist.

17. Vorrichtung nach einem oder mehreren der Ansprüche 2 bis 16, d a d u r c h   g e k e n n z e i c h n e t, daß sich der Querschnitt der Förderleitung (10) in Förderrichtung erweitert.

18. Vorrichtung nach Anspruch 17, d a d u r c h   g e - k e n n z e i c h n e t, daß sich der Querschnitt der Förderleitung (10) in Stufen an oder zwischen den Einmündungen (28) der Gasleitungen (18) erweitert.

0043117

FIG.1

FIG.3

FIG.4

Dürr Automation und Fördertechnik GmbH , D- 7889 Grenzach - Wyhlen

A 0088 b

FIG. 2

0043117

Europäisches
Patentamt

**EUROPÄISCHER RECHERCHENBERICHT**

Nummer der Anmeldung

EP 81 10 4948

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | GB - A - 1 066 152 (ALLIED CHEMICAL CORP.)<br>* Seite 4, Zeilen 123-128; Seite 5, Zeilen 1-94; Figuren 1-3 *<br>-- | 1,2,5, 9,14 |
| | FR - A - 2 216 201 (WAESCHLE)<br>* Seite 7, Zeilen 9-40; Seite 8, Zeilen 1-20; Figuren 1,3,4 *<br>& DE - A - 2 305 030<br>-- | 10,11 |
| | FR - A - 2 339 554 (BABCOCK & WIL-COX)<br>* Seite 5, Zeilen 38-40; Seite 6, Zeilen 1-11; Figur 2 *<br>& DE - A - 2 702 719<br>-- | 18 |
| DA | FR - A - 2 374 238 (MITTELMANN)<br>& DE - A - 2 657 677 | |
| DA | DE - C - 449 393 (SEITZ) | |
| DA | DE - B - 1 121 544 (SIMON)<br>---- | |

**KLASSIFIKATION DER ANMELDUNG (Int. Cl.3)**

B 65 G 53/58
53/66

**RECHERCHIERTE SACHGEBIETE (Int. Cl.3)**

B 65 G

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 29-09-1981 | OSTIJN |

EPA form 1503.1 06.78